# EUROPEAN PATENT APPLICATION

(11) **EP 4 530 932 A1**
(43) Date of publication of application: **02.04.2025**
(21) Application number: 24203132.6
(22) Date of filing: 27.09.2024
(51) Int. Cl.: G06N 3/098, G06N 3/045, G06N 3/084

(54) **SYSTEMS AND METHODS FOR GENERATING INTEGRATED MODELS**

(30) Priority: 28.09.2023 US 202318476634
(71) Applicant: The Boeing Company, Arlington, VA 22202 (US)
(72) Inventor: Parsa, Soheil, Arlington, VA, 22202 (US); Swart, Stephen, Arlington, VA, 22202 (US); Le, Anh, Arlington, VA, 22202 (US); Bellemare-Davis, Alexander, Arlington, VA, 22202 (US); Protsko, Oleksandr, Arlington, VA, 22202 (US); Sadik, Md Nafize, Arlington, VA, 22202 (US)
(74) Representative: Hoffmann Eitle

(57) **Abstract**

A system (200) for generating an integrated model (405) is presented. The system (200) comprises a central server (205) having a plurality of clients (210, 212, 214), each client privately storing data (220, 222, 224) accessible to the central server (205). A model trainer (230) is configured to receive (820) a model proposal (410) from a first client (210) and train (830) the integrated model (405) based on the model proposal (410) and privately stored data (420, 422, 424) for the plurality of clients (210, 212, 214) without exposing the privately stored data (420, 422, 424) for the plurality of clients (210, 212, 214) to the first client (210). A model deployer (234) is configured to disseminate the trained integrated model (405) to one or more of the plurality of clients (210, 212, 214).

## Description

### FIELD

This invention is directed to the field of federated machine learning, and more specifically, to securely federating models across data stored in separate cloud-based environments.

### BACKGROUND

Aircraft and/or other machine parts breaking or failing are associated with a cost. In the case of commercial airlines, one cost is manifest in flight delays, unhappy customers, and/or lost revenue. Therefore, successfully servicing and/or replacing parts before breaking or failing can help reduce such costs.

### SUMMARY

A system for generating an integrated model is presented. The system comprises a central server having a plurality of clients, each client privately storing data accessible to the central server. A model trainer is configured to receive a model proposal from a first client and train the integrated model based on the model proposal and privately stored data for the plurality of clients without exposing the privately stored data for the plurality of clients to the first client. A model deployer is configured to disseminate the trained integrated model to one or more of the plurality of clients.

### BRIEF DESCRIPTION OF THE DRAWINGS

FIG. 1 depicts an example aircraft.
FIG. 2 schematically shows an example system for generating an integrated model.
FIG. 3 schematically depicts features of an example testing system that can generate data for use in performing model training and federation.
FIG. 4 schematically shows aspects of a system employed in the training of an integrated model.
FIG. 5 schematically shows aspects of a system employed in the training of a plurality of local models.
FIG. 6 schematically shows aspects of a system employed in the federation of local models into a federated model.
FIG. 7 schematically shows aspects of a system employed in training a secondary federated model.
FIG. 8 shows a method of generating an integrated model.
FIG. 9 schematically shows an example computing system.

### DETAILED DESCRIPTION

Prognostic and predictive modeling may be used for numerous applications, including engineering, automotive, hydroengineering, electronics, medical devices, medical treatment, etc. Such prognostic models may include predictive models, regressive models, classifiers, anomaly detection models, fault prediction models, aftermath prediction models, and/or other types of machine learning and/or other artificial intelligence modules. Modern modeling algorithms, such as logistic regression, decision trees, and/or neural networks are more effective when they parse data that incorporates a large number of events as input/training data. For sparse event occurrences, e.g., a rare disease, the available datasets may not be able to separate accurate predictions from noise.

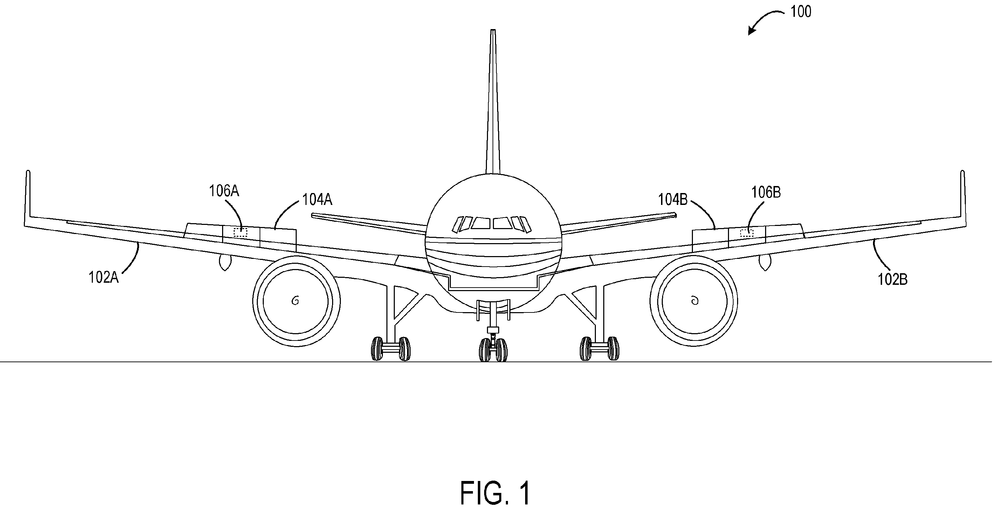

As an example, prognostic and predictive models for aircraft components can be employed to predict safe replacement schedules. One example is predicting a safe replacement schedule for the spoiler power control unit. FIG. 1 shows an example aircraft 100 comprising a right wing 102A and a left wing 102B. Right wing 102A includes wing spoiler 104A, while left wing 102B includes wing spoiler 104B. Wing spoilers 104A and 104B may be employed to extend into or retract from the airflow when aircraft 100 is moving, thus changing the drag and lift characteristics of the wing, allowing for changes in speed, descent rate, roll, etc. The spoiler power control unit's (106A and 106B) positioning on the wing of the aircraft exposes the control unit to moisture, and thus prophylactic maintenance/replacement can enhance aircraft safety and profitability.

However, applying predictive maintenance in commercial aviation is restricted by a lack of sufficient data associated with failures for the training of prognostic models. Prognostic models trained on the modest amount of data associated with such failures tend to be unreliable with poor precision and/or recall.

In an idealized scenario, different airlines employing the same aircraft would pool their data, generating a data set with more total failure events that would allow for the production of a more accurate model. However, while clients desire a better set of predictors for the future, airlines may be reluctant to share sensitive data with each other.

As such, most current solutions are limited to developing prognostic models based on data collected by a single airline. Thus, opportunities to implement predictive maintenance are restricted to problems with a sufficient number of example failure events in the airline's historical data. This generally restricts model generation to airlines with relatively large fleet sizes.

Herein, systems and methods are described that utilize federated machine learning to address these problems and others. Federated machine learning provides an opportunity to improve the performance of these predictive models by combining models trained across several clients (e.g., different airlines) without those clients needing to expose private data to other clients (e.g., competitor airlines). This federated machine learning approach addresses the challenges associated with the training of reliable prognostic models in commercial aviation and other fields, including the limited availability of data associated with equipment failures, and restrictions preventing the sharing of data between clients.

In some examples, clients, such as airlines, are encouraged to submit candidate models for different problems via an accessible network portal, for example. Selected candidate models would then be federated across the separate environments of the participating clients. Each of the participating clients can be notified of new candidate models, and securely and privately contribute data towards further model training without making the data accessible to other clients. Each of the participating clients can then be notified of newly federated models, which they can then choose to deploy to their own environment.

Such an approach is beneficial in facilitating the development of reliable prognostic models for use in multiple environments. Model training and data preparation can be maintained in separate environments, providing secure training and rapid federation of prognostic models without the need for clients to lose the privacy and/or security of their data. Prognostic models can be rapidly federated and deployed for use by clients.

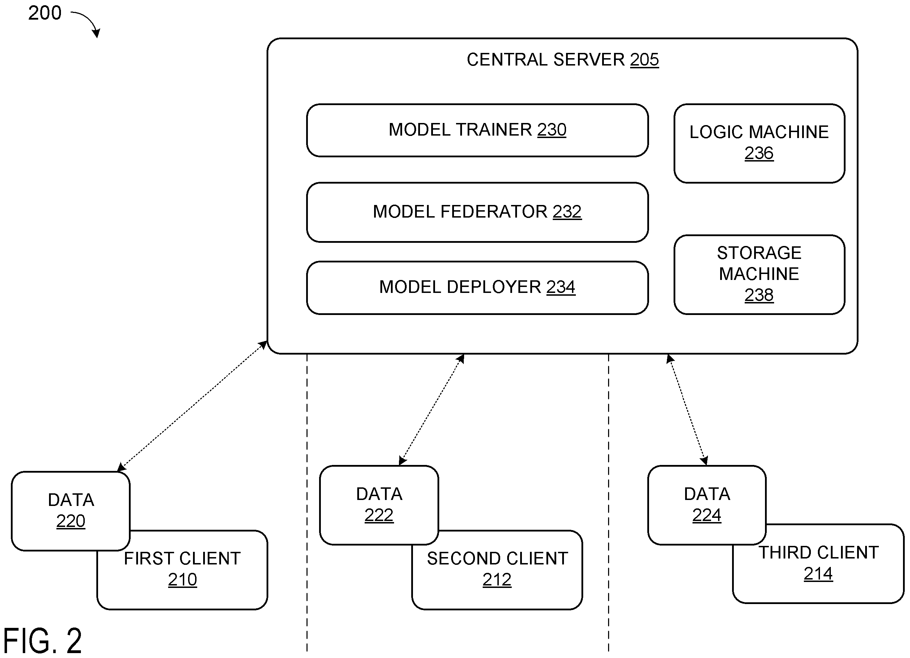

FIG. 2 schematically depicts a system 200 for training an integrated model. System 200 includes a central server 205 having a plurality of clients. In this example, three clients are shown - first client 210, second client 212, and third client 214. However, any number of at least two clients may be communicatively coupled to central server 205.

Each client privately stores data accessible to central server 205 (indicated by dashed lines). For example, each client may locally store data (e.g., data 220, 222, and 224) and provide selective access to central server 205 to at least some of the data for that client. In some examples, each client can selectively upload data to central server 205, and central server 205 may securely store at least some data on behalf of the client (e.g., credentialed and/or encrypted). In some examples, the central server itself or portions thereof may not have access to the decoded data values. In other words, central server 205 may be employed as a data warehouse for a plurality of different clients, allowing each client to maintain their own data privately relative to each other client within the architecture of system 200. Regardless, system 200 encourages each client to actively participate in model training. Data and prospective models can be knowingly contributed by each client with permission for system 200 to generate and train integrated models based on their contributions.

While primarily described with regards to the example of aircraft mechanical maintenance, clients 210, 212, and 214 may be organizations within a common field, such as engineering, meteorology, medicine, language, etc. As described with regard to FIG. 1, the plurality of clients may be airlines that employ common aircraft models. In such an example, the data stored by each client may have common characteristics that make allow for integrating the data into a larger cohort. Each client may operate in a unique environment - e.g., aircraft for one airline may be exposed to a unique set of environmental conditions and operating conditions. In other words, the data for each client may have more in common internally than with the data for other clients.

Many central servers offer a plurality of services and have established data pipelines with their clients. The systems herein may take advantage of this pre-existing architecture and set of digital relationships. Such an arrangement may lend itself to subscription services. For example, data can be uploaded from each client as part of a subscription model, or in response to a specific prompt, such as new models coming online.

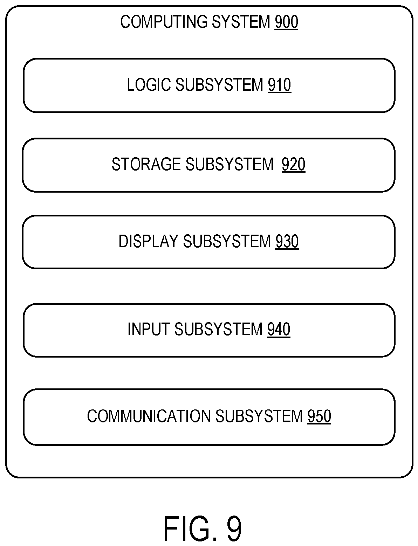

Central server 205 comprises at least a model trainer 230, a model federator 232, and a model deployer 234. Central server 205 further comprises at least a logic machine 236 and a storage machine 238. Logic machine 236 can include one or more processors, for example, while storage machine 238 may comprise any suitable combination of non-volatile storage media and volatile storage media. More detailed descriptions of logic machines and storage machines may be found herein and with regard to FIG. 9.

The model trainer 230 can be configured to train machine-learning models according to any suitable training procedure. Non-limiting examples of training procedures for the machine-learning model include supervised training (e.g., using gradient descent or any other suitable optimization method), zero-shot, few-shot, unsupervised learning methods (e.g., classification based on classes derived from unsupervised clustering methods), reinforcement learning (e.g., deep Q learning based on feedback) and/or based on generative adversarial neural network training methods.

The machine-learning model can be trained via supervised training on the set of input data with regard to an objective function measuring an accuracy, precision, and/or recall of determining a likelihood of a specified event by the machine-learning model as compared to actual occurrences of specified events(s) indicated in the input data. In some instances, training is supervised or partially supervised using indications of ground truth. As used herein, "ground truth" refers to information that is known to be real or true and is typically input by human analysts or users. Once trained, the machine-learning model may be any one of a number of model types. The trained machine-learning model may be deployed to predict events happening, predict what is likely to happen following an event, to classify events, to detect anomalies, to perform regression, perform inference, etc. In this way, model trainer 230 can support different types of integrated models needed for the characterization of different events, such as equipment safe-replacement indicators.

Model trainer 230 may randomly initialize weights and biases of the untrained model so as to apply a unique configuration of weights and biases to each model. The training functions of model trainer 230 use the input data and randomly initialized weights and biases to train the one or more untrained models and generate one or more trained models.

The training functions can use one or more backpropagation algorithms to update or adjust the weights and biases of the one or more untrained models based on a comparison between the predicted coefficients outputted by the one or more trained models and the labels in the input data. The training functions can include a loss function to measure the error between the predicted coefficients outputted by the one or more models and the labels in the input data, so that the measured error can be minimized with each iteration of the backpropagation algorithm. This iterative process of updating or adjusting the weights and biases can continue until the output of predicted coefficients output by the one or more models converge with the labels in the input data, signifying convergence, or the minimization of the loss function. The proposed model is trained using the respective client's private feature data without sharing or surrendering the feature data.

Model deployer 234 may package, compare, and/or develop interfaces for machine learning models before delivering the model or posting the model for retrieval by the client(s). Model deployer may deploy both local (e.g., single client/environment) models and federated models, e.g., for the purpose of making predictions on new data. Model deployer 234 can be configured to push model files and/or indications of new and/or updated models. In some examples, model deployer 234 may evaluate different candidate models for a given problem, disseminating the best performing model to the participating clients.

Model federator 232 can combine several individual models into a single federated model. Model federator 232 receives two or more trained local models which have been trained on the existing private data of the respective clients. Each of the received trained models reflects the model attributes of the respective client by applying the local existing private feature data to a feature mapper that maps the respective client's feature data to the trained local models. Trained model attributes can include the weights given to model variables and the hidden layers included in neural network models, for example. The trained local models can be a common analytical model across all clients, enabling federation of the models.

Model federator 232 can generate an integrated, aggregate model by federating models from a grouping of similar trained local models using federated learning techniques such as federated stochastic gradient descent, federated averaging, federated learning with dynamic regularization, dynamic aggregation, e.g. inverse distance aggregation, and hybrid federated dual coordinate ascent.

Model federator 232 may receive the models of the similar client assets of a group and, using federated learning techniques, federate the plurality of models into a single aggregate model. Model federator 232 uses federated learning techniques to generate an amalgamation of the plurality of models, resulting in a model that reflects the higher level of quality that is attained by applying a model to a larger set of feature data, but in this case, without sharing or surrendering the respective sets of client feature data.

The client asset models that are received by model federator 232 have been trained by processing existing local client (e.g., private) asset feature data mapped to the canonical input features of the model by use of the feature mapper previously trained on the seed model by each respective client. The respective client asset models received by model federator 232 reflect an output level of accuracy that is based solely on the respective feature data of the individual client assets. Each received model includes updated parameters and weights based on the respective feature data of the respective client data. Federating the parameters and weights based on techniques, such as federated averaging, results in a single aggregate model that has the machine learning accuracy of the combination of the respective feature data sets of multiple client assets without disclosing or sharing the feature data.

The central server 205 thus may enable the rapid federation of integrated models through the automation of the data preparation and model training within separate client environments, the combination of the trained local models into a federated model, and the delivery of the federated model to each of the airlines.

Central server 205 may act as a federated learning portal that would allow clients to submit candidate models for different problems. These candidate models can then be trained and federated across the separate environments of participating clients. Each of the participating clients can be notified of newly federated models, which they could then choose to deploy to their own environment.

As such, central server 205 provides a community benefit, where, even if some clients do not employ their own data scientists, they can sign on and contribute the value of their data without having exposed their sensitive data to other clients. Each participating client still attains the benefit of somebody having developed a model. Clients that have data scientists but have limited amounts of data get to leverage the value of data from other operators. In this way, the clients are the direct beneficiaries of the system, rather than the service provider, which does not gain value from the generated models.

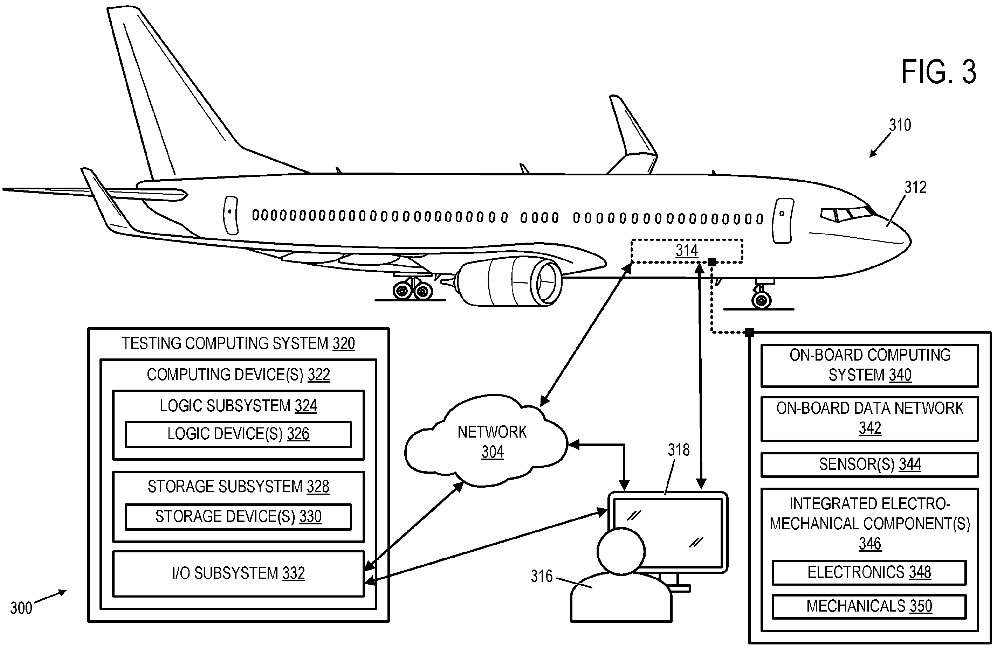

FIG. 3 is a schematic diagram depicting features of an example testing system 300 that can generate data for use in performing model training and federation as disclosed herein. Testing system 300 can be applied to an electro-mechanical test subject 310, which in the example of FIG. 3 takes the form of an aircraft 312.

Testing system 300 includes a testing computing system 320 of one or more computing devices 322. The one or more computing devices 322 collectively include a logic subsystem 324 of one or more logic devices 326 (e.g., processors), a storage subsystem 328 of one or more data storage devices 330, and an input / output subsystem 332 by which testing computing system 320 can communicate with other devices. Additional descriptions of example computing devices may be found herein and with regard to FIG. 9.

As an example, testing computing system 320 can communicate with electro-mechanical components 314 integrated with or otherwise interfacing with electro-mechanical test subject 310. As an example, aircraft 312 of FIG. 3 takes the form of a multi-passenger, commercial airliner and/or a freight aircraft having on-board electro-mechanical components that are integrated with the aircraft. In at least some examples, communications between electro-mechanical components 314 and testing computing system 320 can be over one or more intermediate communications networks 304, which provide one or more wired communications links and/or one or more wireless communications links that utilize wired and/or wireless communications protocols.

Human users represented schematically at 316 can interact with testing computing system 320 and/or electro-mechanical components 314 associated with test subject 310 via one or more computer terminals 318, represented schematically in FIG. 3. Communications between or among terminals 318, testing computing system 320, and electro-mechanical components 314 can traverse network 304. In at least some examples, one or more of terminals 318 can be integrated with testing computing system 320 and/or one or more of terminals 318 can be integrated with electro-mechanical components 314 of the test subject.

Electro-mechanical components 314 are depicted schematically in further detail in FIG. 3 as including an on-board computing system 340, an on-board data network 342, a set of one or more sensors 344 associated with test subject 310, and one or more integrated electro-mechanical components 346 of the test subject, including electronic components 348 and mechanical components 350.

On-board computing system 340 can similarly include one or more of the components previously described with reference to testing computing system 320. In an example, on-board computing system 340 can be integrated with test subject 310 and can be used to control operation of the test subject. Within the context of example aircraft 312, on-board data network 342 can be used to manage the flow of data between or among the various systems and subsystems of the aircraft, including on-board computing system 340, as well as power subsystems, electro-mechanical subsystems, flight deck subsystems, service personnel subsystems, entertainment subsystems, etc., of integrated electro-mechanical components 346, and sensor subsystems including sensors 344. As an example, on-board data network 342 can include an integrated aircraft data network, such as a common data network (CDN). On-board data network 342 can include bi-directional fiber optic and/or copper network pathway components, bridges, switches, routers, hubs, etc. over which communications and/or electrical power are communicated utilizing a set of communications protocols and standards.

Sensors 344 can be integrated with the various integrated electro-mechanical components 346 of electro-mechanical test subject 310 and/or physically interfaced with the test subject by technicians during production or maintenance. Sensors 344 can be used to measure operation and performance of integrated electro-mechanical components 346 during testing, maintenance, and/or operation of test subject 310. Sensors 334 can include a variety of sensor types that measure electrical properties of electronic components 348, such as a voltage, resistance, current, impedance, capacitance, power, etc. As an example, sensors 344 can include a battery voltage sensor that measures a voltage of a battery located on-board the test subject. Sensors 344 can include a variety of sensor types that measure physical, non-electrical properties of mechanical components 350 or other physical features of the test subject, such as a position, velocity, acceleration, force, work, impulse, pressure, temperature, quantity, presence, etc. As an example, sensors 344 can include a hydraulic pressure sensor that measures hydraulic pressure in a hydraulic actuator responsible for positioning a flight control surface, and a position sensor that measures the positioning of the flight control surface.

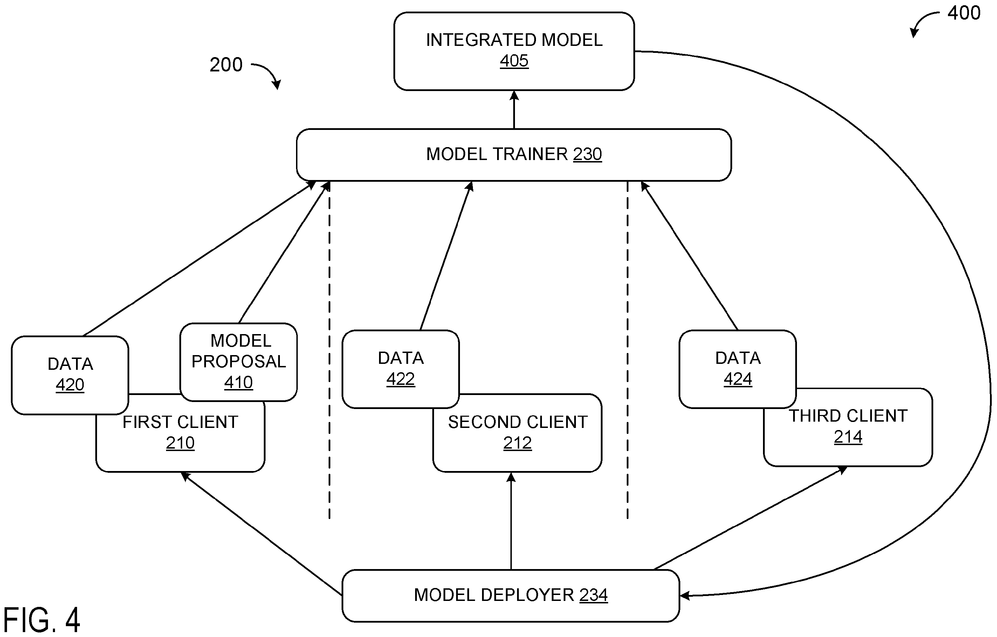

FIG. 4 depicts an example scenario 400 by which system 200 generates and deploys an integrated model 405. Model trainer 230 may be a neural network model trainer configured to train one or more untrained models based on model proposal 410. First client 210 may submit model proposal 410 to model trainer 230 along with relevant data 420. For example, first client 210 may submit a model proposal related to an event class along with data relevant to that event class. For example, if the event class includes an aircraft part failure, the relevant data may include instances of that failure type and data collected from the lead-up to those failure events.

Data 420 may include statistical data, such as the data described for an aircraft with regard to FIG. 3. Data 420 may also include labels, such as event labels, data type labels, coefficients, etc. Model trainer 230 can be configured to train models on a per client basis using private information from that individual client to train the model. Model trainer 230 may also coordinate the training of integrated model 405 within separate environments for each client (e.g., first client 210, second client 212, and third client 214).

System 200 may support various types of integrated models 405, such as those needed for the characterization of different equipment maintenance triggers. Maintenance triggers may include servicing or replacing a component based on one or more indicators that the component exhibits reduced performance, imminent failure, and/or complete failure. Model trainer 230 can be configured to receive a model proposal 410 from first client 210. For example, first client 210 may submit a model proposal 410 that predicts a likelihood of occurrence of a future event, such as a maintenance trigger for an aircraft part. As a non-limiting example, model proposal 410 may suggest a correlation between mean operating temperature and spoiler power control unit performance degradation. Model trainer 230 may then train a proposed model based on model proposal 410 and privately stored data 420 for first client 210. The resulting model may be considered a first trained local model.

Model deployer 234 may disseminate the model proposal and/or the first trained local model to at least some of the plurality of clients (e.g., second client 212 and third client 214) without exposing the privately stored data (e.g., data 422, 424) for the plurality of clients to first client 210 prior to training integrated model 405 (indicated by dashed lines). The privately stored data is made accessible (e.g., uploaded, permissions changed) by one or more additional clients in response to dissemination of the model proposal. Central server 205 may thus store some information that is not available to other clients, while anonymously exposing data that would be useful in training a specific integrated model to allow for the largest possible training data cohort. Clients can thus contribute the value of their private data stores without exposing their data to other clients.

Each client may govern how their data is used and made accessible. In some examples, a client with no relevant event data may not participate in the generation of a integrated model. In other examples, there may be other, peripheral data that can strengthen negative correlations when submitted by a client. Model trainer 230, when provided with a larger data set from multiple clients, can then train integrated model 405 based on model proposal 410. Training integrated model 405 may include re-training the first trained local model.

Integrated model 405 can then be disseminated to clients via model deployer 234. Clients 210, 212, and 214 get the benefit of operating a well-trained integrated model without having to do any of the training locally. Further, model proposal 410 is trained using a large data set without any of the client's being required to expose their sensitive data to any other client.

In some examples, a model trainer may train plurality of local models, establishing parameters for each local model. The model trainer may thus coordinate the training of the local models within separate environments for each client.

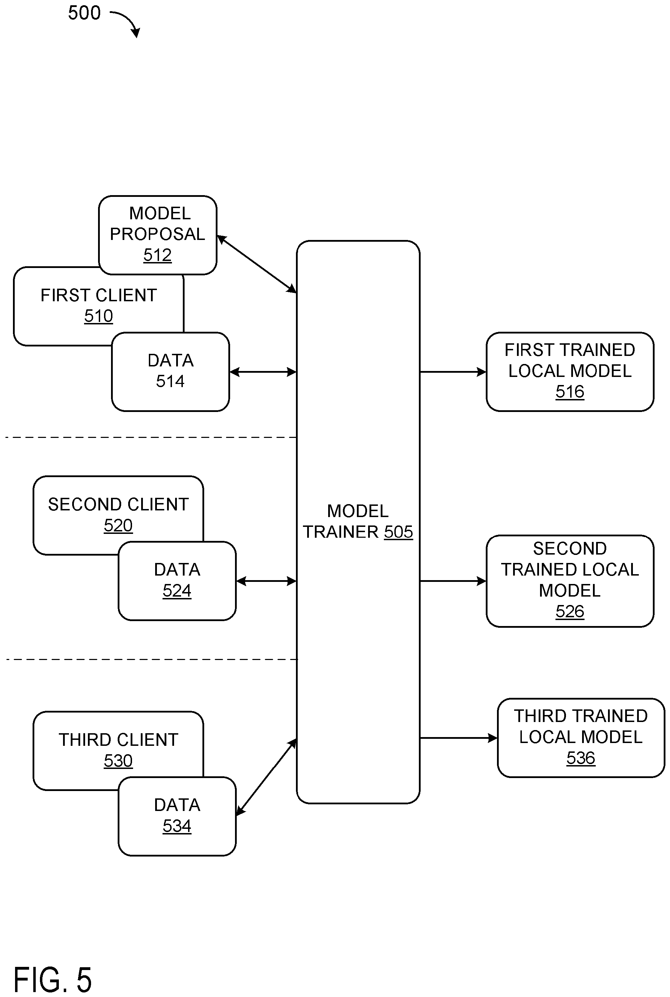

FIG. 5 shows an example scenario 500 for training multiple local models with a model trainer 505 based on a single model proposal. Model trainer 505 may be an example of model trainer 230. First client 510 submits a model proposal 512 and accompanying relevant data 514 to model trainer 505 via a central server. Model trainer 505 trains a first trained local model 515 based on model proposal 512 and data 514, setting parameters for first trained local model 516.

Model proposal 512 and/or first trained local model 516 may be disseminated to a plurality of clients via a model deployer. Second client 520 may then provide access to data 524, and third client 530 may provide access to data 534.

Model trainer 505 may then train one or more additional trained local models, each additional trained local model based on the model proposal and privately stored data for one additional client without exposing the privately stored data for the one additional client to the first client. In other words, model trainer 505 trains local models for each client based on contributed data for client's environment. Data 524 yields second trained local model 526, and data 534 yields third trained local model 536. None of first client 510, second client 520, and third client 530 have access to each other's data (indicated by dashed lines). In some examples, model trainer 505 may act within each client space to run a model training process. Model trainer 505 may then return from the client space with the resulting model parameters for that client. As such, the model-training process itself may be maintained as a secure and private process.

The privately stored data used to train additional trained local models includes one or more instances of a previous occurrence of the event being modeled. For example, the initial set of local data 514 includes one or more instances of an event in the event class. The secondary client's data (data 524, data 534) also includes one or more instances of events in the event class.

Clients may not share exacting specifications for how they label their data, or even how they identify and classify key events. The central server can be further configured to align metadata from two or more clients prior to model training. For example, if certain signals are labeled differently, those signals may be given a common descriptor. If one client restricts their data set so that a particular signal set is not included, the client's data sets may be aligned so that equivalent signals sort together. Clients may have differences in opinion and therefor in labeling as to what constitutes an event (e.g., a component maintenance trigger) and other target variables. These events may be aligned with common definitions prior to initiating model training.

As an example, table 1 shows data for four example clients, in this example airline operators Air1, Air2, Air3, and Air 4. Each operator contributes data for a number of events (e.g., maintenance triggers) for a given fleet size. Precision and recall are shown for trained local models for each operator.

**Table 1 - Local models**

| Operator | Fleet Size | Maintenance Triggers | Precision | Recall |
|---|---|---|---|---|
| Air1 | 22 | 36 | 0.37 | 0.58 |
| Air2 | 10 | 31 | 0.42 | 0.5 |
| Air3 | 21 | 21 | 0.59 | 0.23 |
| Air4 | 42 | 32 | 0.79 | 0.71 |

In this example, each of Air1, Air2, Air3, and Air4 contribute data from unique environments, and thus generate a unique trained local model. Although Air4 has the largest fleet size, Air1 has the largest number of maintenance triggers, and thus may be considered to be contributing the largest data set.

In examples where a client network is established, first client 510 may push model proposal 512 to second client 520 and third client 530 with direct peer-to-peer sharing, circumventing model trainer 505 and any model deployer. In examples where first client 510 is configured to train models locally, first trained local model 516 could be pushed directly to other clients. In these examples, "pushing" a model or model proposal may include pushing a notification regarding the availability of new models or model proposals. In examples wherein one or more clients employ their own model trainer, each of the one or more clients can upload parameters for trained local models to the central server, as an alternative to, or in addition to the raw local data.

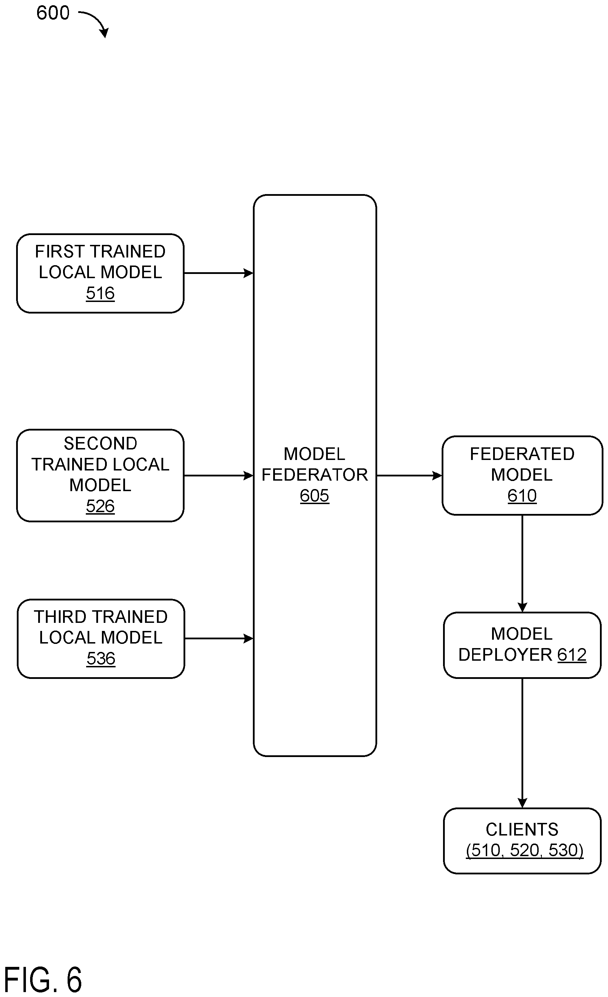

As described with regard to FIG. 6, once the plurality of local models has been trained, a model federator can federate the local models into a global federated model with a single set of parameter values, and the central server can disseminate the global model to clients via a model deployer.

FIG. 6 depicts a scenario 600, wherein model federator 605 combines several individual locally trained prognostic models into a single federated model. Scenario 600 follows scenario 500, such that first trained local model 516, second trained local model 526, and third trained local model 536 have been trained by model trainer 505.

First trained local model 516, second trained local model 526, and third trained local model 536 are fed to model federator 605. Model federator 605 may be an example of model federator 232. Model federation may allow for the development of better performing prognostic models.

Model federator 605 is configured to federate first trained local model 516 and the one or more additional trained local models (526, 536) to generate trained federated model 610. Federated model 610 may be considered an example of an integrated model, such as integrated model 405, as data from multiple sources is integrated during training. Each trained local model may comprise a set of parameters and a set of results. Trained federated model 610 may comprise one or more parameters that differ from parameters of first trained local model 516 or are otherwise refined. This may generate a federated model 610 that performs better than any of the trained local models, leveraging the benefit of data from each client without exposing that data to the other clients in the cohort. Model federator 605 may use different aggregation protocols depending on the initial data, model parameters, and model proposal. In some examples, a voting system may increase the likelihood of obtaining a monotonic benefit with the trained prognostic model.

As an example, Table 2 shows recall and precision valuations for local and prognostic models for four airlines. In this example, four relatively weak performing local models are federated into a higher performing prognostic model. As shown, the federated prognostic model displays at least equal precision against each local model, outperforming the local model for three of four clients.

**Table 2 - Local vs Federated Models**

| | Precision | | Recall | |
|---|---|---|---|---|
| Operator | Local Model | Federated Model | Local Model | Federated Model |
| Air1 | 0.37 | ***0.57*** | ***0.58*** | 0.5 |
| Air2 | 0.42 | ***0.55*** | 0.5 | 0.5 |
| Air3 | 0.59 | 0.59 | 0.23 | 0.23 |
| Air4 | 0.79 | ***0.84*** | ***0.71*** | 0.43 |

Model deployer 612 is configured to disseminate trained federated model 610 to one or more of the plurality of clients (e.g., clients 510, 520, 530). Model deployer 612 may also disseminate first trained local model 516 to first client 510 and may disseminate each additional trained local model (526, 536) to a respective additional client (520, 530). The disseminated models may then be employed for at least the purpose of making predictions on new data. Each client that contributed data, and/or had a local model trained on their data may be offered a copy of the federated model, as the federated model would have been trained on that client's data.

In classical examples of federated machine learning, the models are deployed directly to the service provider, whereas in this example, there is peer to peer sharing of models. Additionally, the models are generally directed to behavior of a user - e.g., typing patterns, predictive text. In this community-based setting, privacy standards are relaxed only so that client data may be shared with the central server, while remaining private from other clients. Further, this scenario is modeling the device itself, rather than a user or user habits, trimming the data that is needed to train an accurate federated model. Additionally, the benefits of an accurate federated model are passed to the clients using the community-based architecture, rather than remaining with the central server.

In some examples, the central server can evaluate different candidate models for a given problem, disseminating the best performing model to the participating clients. This scenario may take advantage of an automated model federation process.

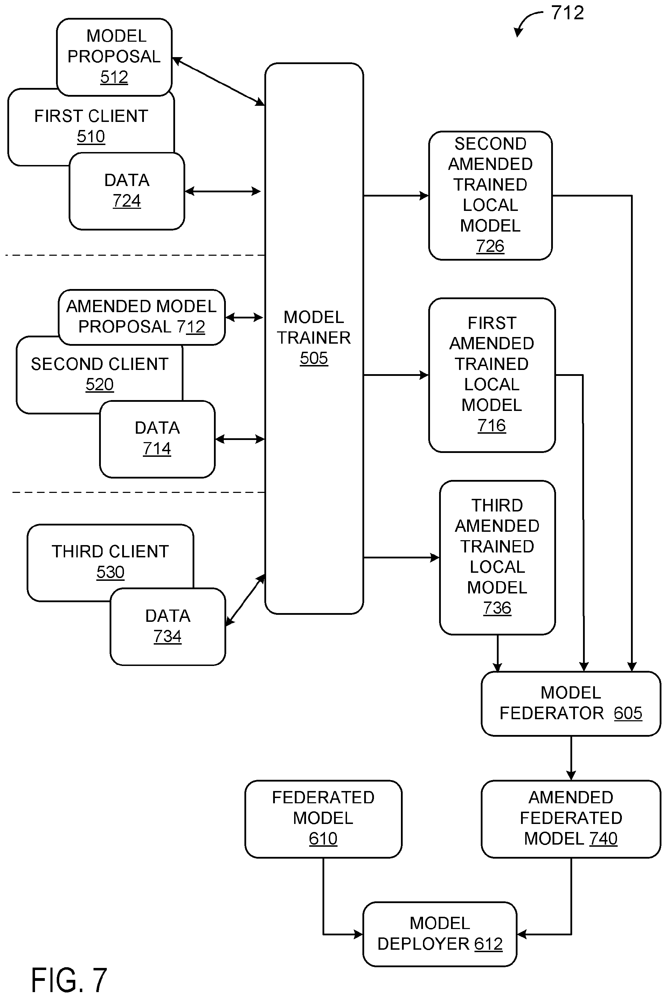

FIG. 7 shows an example scenario 700 for training an amended prognostic model with model trainer 505 based on an amended model proposal. First client 510 previously submitted a model proposal 512, which resulted in the federation and deployment of federated model 610.

Once federated model 610 has been disseminated to second client 520 and third client 530, those clients can view that model as well as their respective local models and may propose improvements to federated model 610 as part of a community driven effort. An amended model may be proposed, trained, and federated, which may yield a model that improves upon the original federated model.

For example, second client 520 may submit an amended model proposal 712 and accompanying relevant data 714 to model trainer 505 via a central server. Second client 520 can propose a different model for predicting the same event as first model proposal 512. Amended model proposal 712 may be based on results and observations of the initial model. As an example, the amended model proposal may suggest that the maximum in-flight temperature correlates more strongly with spoiler control unit performance degradation than does median temperature.

Model trainer 505 trains a first amended trained local model 716 based on amended model proposal 712 and data 714, setting parameters for first amended trained local model 716. Model trainer 505 may then train one or more additional trained local models, each additional trained local model based on the model proposal and privately stored data for one additional client without exposing the privately stored data for the one additional client to the first client (indicated by dashed lines). In other words, model trainer 505 trains local models for each client based on contributed data for client's environment. Data 724 yields second amended trained model 726, and data 734 yields third amended trained local model 736. None of first client 510, second client 520, and third client 530 have access to each other's data.

In some examples, the data needed for training the amended trained local models may have been made accessible during training of the first trained local model, e.g., data 714 is included in data 524. However, in some examples, additional data may be needed to be accessed for training of the amended trained local models.

Model federator 605 is further configured to federate first amended trained local model 716 and the one or more additional amended trained local models (726, 736) to generate an amended trained federated model 740. Model deployer 612 is configured to compare the trained federated model 610 and the amended trained federated mode 740, and to disseminate a higher performing federated model to each of the plurality of clients.

As an example, Table 3 shows recall and precision valuations for initial and amended federated models for four airlines. In this example, the amended federated model at least equal precision and at least equal recall against the initial federated model.

**Table 3 - Retraining**

| | Precision | | Recall | |
|---|---|---|---|---|
| Operator | Federated Model 1 | Federated Model 2 | Federated Model 1 | Federated Model 2 |
| Air1 | 0.57 | ***0.63*** | 0.5 | ***0.58*** |
| Air2 | 0.55 | 0.55 | 0.5 | 0.5 |
| Air3 | 0.59 | 0.59 | 0.23 | 0.23 |
| Air4 | 0.84 | ***0.9*** | 0.43 | 0.43 |

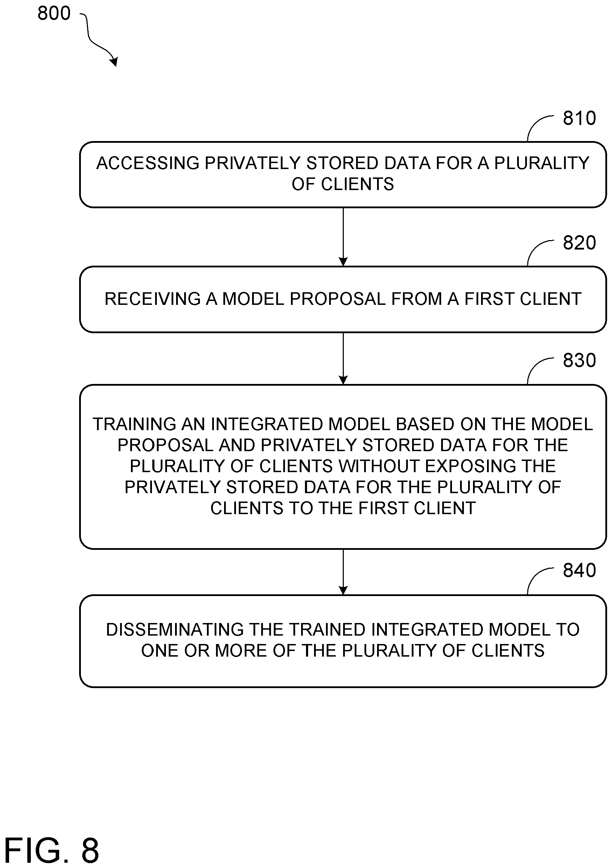

FIG. 8 shows a flow diagram for an example method 800 for generating an integrated model. Method 800 may be executed by a logic subsystem, such as logic machine 236 of central server 205.

At 810, method 800 comprises accessing privately stored data for a plurality of clients. For example, each client may selectively store data at a central server, and/or may store data locally and selectively provide the central server access to at least some of the stored data.

At 820, method 800 comprises receiving a model proposal from a first client. At 830, method 800 comprises training the integrated model based on the model proposal and privately stored data for the plurality of clients without exposing the privately stored data for the plurality of clients to the first client.

In some examples, training the integrated model comprises training a proposed model based on the model proposal and privately stored data from the first client to generate a first trained local model, as described with regard to FIG. 4. Training the integrated model may further comprise training one or more additional trained local models, each additional trained local model based on the model proposal and privately stored data for one additional client without exposing the privately stored data for the one additional client to the first client, as described with regard to FIG. 5.

Training the integrated model may further comprise federating the first trained local model and the one or more additional trained local models to generate a trained federated model, as described with regard to FIG. 6.

At 840, method 800 comprises disseminating the trained integrated model to one or more of the plurality of clients. In some examples, the trained local models may be disseminated to their respective clients.

In some examples, a client may upload data that is mislabeled, omit data that is relevant to a integrated model, or generate new, relevant data. Re-labeling or redrawing a data cohort may be automatically recognized by the model trainer, which may trigger automatic re-training and/or re-federation of the integrated model. Updated global models may be disseminated by the model deployer.

Given a trained local model and a trained federated model, each client can decide to field-use whichever model has higher value. As shown in table 2, federated models generally have higher precision and/or recall than their local counterparts. However, a local model for unique environment may be more accurate even with fewer data points. For example, a local model could outperform a federated model if environmental characteristics cause strong correlation - e.g., flight duration, atmospheric conditions, load.

Large clients with significantly larger data sets then their small client counterparts may need to be incentivized to contribute data to the central server. For example, model federation could be monetized, whereby a client is paid if their model is federated and other clients use the model.

The methods and processes described herein may be tied to a computing system of one or more computing devices. In particular, such methods and processes may be implemented as an executable computer-application program, a network-accessible computing service, an application-programming interface (API), a library, or a combination of the above and/or other compute resources.

FIG. 9 schematically shows a simplified representation of a computing system 900 configured to provide any to all of the compute functionality described herein. Computing system 900 may take the form of one or more personal computers, network-accessible server computers, tablet computers, home-entertainment computers, gaming devices, mobile computing devices, mobile communication devices (e.g., smart phone), virtual/augmented/mixed reality computing devices, wearable computing devices, Internet of Things (IoT) devices, embedded computing devices, and/or other computing devices.

Computing system 900 includes a logic subsystem 910 and a storage subsystem 920. Computing system 900 may optionally include a display subsystem 930, input subsystem 940, communication subsystem 950, and/or other subsystems not shown in FIG. 9. Callbacks - FIGS. 2/3

Logic subsystem 910 includes one or more physical devices configured to execute instructions. For example, the logic subsystem may be configured to execute instructions that are part of one or more applications, services, or other logical constructs. The logic subsystem may include one or more hardware processors configured to execute software instructions. Additionally or alternatively, the logic subsystem may include one or more hardware or firmware devices configured to execute hardware or firmware instructions. Processors of the logic subsystem may be single-core or multi-core, and the instructions executed thereon may be configured for sequential, parallel, and/or distributed processing. Individual components of the logic subsystem may optionally be distributed among two or more separate devices, which may be remotely located and/or configured for coordinated processing. Aspects of the logic subsystem may be virtualized and executed by remotely-accessible, networked computing devices configured in a cloud-computing configuration.

Storage subsystem 920 includes one or more physical devices configured to temporarily and/or permanently hold computer information such as data and instructions executable by the logic subsystem. When the storage subsystem includes two or more devices, the devices may be collocated and/or remotely located. Storage subsystem 920 may include volatile, nonvolatile, dynamic, static, read/write, read-only, random-access, sequential-access, location-addressable, file-addressable, and/or content-addressable devices. Storage subsystem 920 may include removable and/or built-in devices. When the logic subsystem executes instructions, the state of storage subsystem 920 may be transformed - e.g., to hold different data.

Aspects of logic subsystem 910 and storage subsystem 920 may be integrated together into one or more hardware-logic components. Such hardware-logic components may include program- and application-specific integrated circuits (PASIC / ASICs), program- and application-specific standard products (PSSP / ASSPs), system-on-a-chip (SOC), and complex programmable logic devices (CPLDs), for example.

The logic subsystem and the storage subsystem may cooperate to instantiate one or more logic machines. As used herein, the term "machine" is used to collectively refer to the combination of hardware, firmware, software, instructions, and/or any other components cooperating to provide computer functionality. In other words, "machines" are never abstract ideas and always have a tangible form. A machine may be instantiated by a single computing device, or a machine may include two or more sub-components instantiated by two or more different computing devices. In some implementations a machine includes a local component (e.g., software application executed by a computer processor) cooperating with a remote component (e.g., cloud computing service provided by a network of server computers). The software and/or other instructions that give a particular machine its functionality may optionally be saved as one or more unexecuted modules on one or more suitable storage devices.

Machines may be implemented using any suitable combination of state-of-the-art and/or future machine learning (ML), artificial intelligence (AI), and/or natural language processing (NLP) techniques. Non-limiting examples of techniques that may be incorporated in an implementation of one or more machines include support vector machines, multi-layer neural networks, convolutional neural networks (e.g., including spatial convolutional networks for processing images and/or videos, temporal convolutional neural networks for processing audio signals and/or natural language sentences, and/or any other suitable convolutional neural networks configured to convolve and pool features across one or more temporal and/or spatial dimensions), recurrent neural networks (e.g., long short-term memory networks), associative memories (e.g., lookup tables, hash tables, Bloom Filters, Neural Turing Machine and/or Neural Random Access Memory), word embedding models (e.g., GloVe or Word2Vec), unsupervised spatial and/or clustering methods (e.g., nearest neighbor algorithms, topological data analysis, and/or k-means clustering), graphical models (e.g., (hidden) Markov models, Markov random fields, (hidden) conditional random fields, and/or AI knowledge bases), and/or natural language processing techniques (e.g., tokenization, stemming, constituency and/or dependency parsing, and/or intent recognition, segmental models, and/or super-segmental models (e.g., hidden dynamic models)).

In some examples, the methods and processes described herein may be implemented using one or more differentiable functions, wherein a gradient of the differentiable functions may be calculated and/or estimated with regard to inputs and/or outputs of the differentiable functions (e.g., with regard to training data, and/or with regard to an objective function). Such methods and processes may be at least partially determined by a set of trainable parameters. Accordingly, the trainable parameters for a particular method or process may be adjusted through any suitable training procedure, in order to continually improve functioning of the method or process.

Non-limiting examples of training procedures for adjusting trainable parameters include supervised training (e.g., using gradient descent or any other suitable optimization method), zero-shot, few-shot, unsupervised learning methods (e.g., classification based on classes derived from unsupervised clustering methods), reinforcement learning (e.g., deep Q learning based on feedback) and/or generative adversarial neural network training methods, belief propagation, RANSAC (random sample consensus), contextual bandit methods, maximum likelihood methods, and/or expectation maximization. In some examples, a plurality of methods, processes, and/or components of systems described herein may be trained simultaneously with regard to an objective function measuring performance of collective functioning of the plurality of components (e.g., with regard to reinforcement feedback and/or with regard to labelled training data). Simultaneously training the plurality of methods, processes, and/or components may improve such collective functioning. In some examples, one or more methods, processes, and/or components may be trained independently of other components (e.g., offline training on historical data).

When included, display subsystem 930 may be used to present a visual representation of data held by storage subsystem 920. This visual representation may take the form of a graphical user interface (GUI). Display subsystem 930 may include one or more display devices utilizing virtually any type of technology. In some implementations, display subsystem may include one or more virtual-, augmented-, or mixed reality displays.

When included, input subsystem 940 may comprise or interface with one or more input devices. An input device may include a sensor device or a user input device. Examples of user input devices include a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition.

When included, communication subsystem 950 may be configured to communicatively couple computing system 900 with one or more other computing devices. Communication subsystem 950 may include wired and/or wireless communication devices compatible with one or more different communication protocols. The communication subsystem may be configured for communication via personal-, local- and/or wide-area networks.

This disclosure is presented by way of example and with reference to the associated drawing figures. Components, process steps, and other elements that may be substantially the same in one or more of the figures are identified coordinately and are described with minimal repetition. It will be noted, however, that elements identified coordinately may also differ to some degree. It will be further noted that some figures may be schematic and not drawn to scale. The various drawing scales, aspect ratios, and numbers of components shown in the figures may be purposely distorted to make certain features or relationships easier to see.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

Further, the disclosure comprises configurations according to the following clauses.

Clause 1. A system for generating an integrated model, comprising: a central server having a plurality of clients, each client privately storing data accessible to the central server; a model trainer configured to: receive a model proposal from a first client; and train the integrated model based on the model proposal and privately stored data for the plurality of clients without exposing the privately stored data for the plurality of clients to the first client; and a model deployer configured to disseminate the trained integrated model to one or more of the plurality of clients.

Clause 2. The system of clause 1, wherein the model trainer is further configured to: train a proposed model based on the model proposal and privately stored data from the first client to generate a first trained local model; and train one or more additional trained local models, each additional trained local model based on the model proposal and privately stored data for one additional client without exposing the privately stored data for the one additional client to the first client.

Clause 3. The system of clause 2, further comprising a model federator configured to federate the first trained local model and the one or more additional trained local models to generate a trained federated model.

Clause 4. The system of clauses 1 to 3, wherein the model trainer is further configured to: receive, from a second client, an amended model proposal; train an amended trained local model based on the amended model proposal and privately stored data from the second client to generate a first amended trained local model; and train one or more additional amended trained local models, each additional amended trained local model based on the amended model proposal and privately stored data for one additional client, such that the data from each additional client is not exposed to any other client, and wherein the model federator is further configured to federate the amended trained local model and the one or more additional amended trained local models to generate an amended trained federated model.

Clause 5. The system of clauses 1 to 4, wherein the model deployer is configured to compare the trained federated model and the amended trained federated model, and to disseminate a higher performing federated model to each of the plurality of clients.

Clause 6. The system of clauses 1 to 5, wherein the model deployer disseminates the model proposal to at least some of the plurality of clients prior to training each additional trained local model.

Clause 7. The system of clauses 1 to 6, wherein data is uploaded by one or more additional clients in response to dissemination of the model proposal.

Clause 8. The system of clauses 1 to 7, wherein the model deployer disseminates the first trained local model to the first client and disseminates each additional trained local model to a respective additional client.

Clause 9. The system of clauses 1 to 8, wherein the proposed model predicts a likelihood of an occurrence of a future event.

Clause 10. The system of clauses 1 to 9, wherein the privately stored data used to train additional trained local models includes one or more instances of a previous occurrence of the event.

Clause 11. The system of clauses 1 to 10, wherein the plurality of clients are airlines employing common aircraft models.

Clause 12. The system of clauses 1 to 11, wherein the future events include maintenance trigger for an aircraft component.

Clause 13. The system of clauses 1 to 12, wherein the trained integrated model comprises one or more parameters that differ from parameters of the first trained local model.

Clause 14. A method for generating an integrated model, comprising accessing privately stored data for a plurality of clients; receiving a model proposal from a first client; training the integrated model based on the model proposal and privately stored data for the plurality of clients without exposing the privately stored data for the plurality of clients to the first client; and disseminating the trained integrated model to one or more of the plurality of clients.

Clause 15. The method of clause 14, further comprising training a proposed model based on the model proposal and privately stored data from the first client to generate a first trained local model; and training one or more additional trained local models, each additional trained local model based on the model proposal and privately stored data for one additional client without exposing the privately stored data for the one additional client to the first client.

Clause 16. The method of clause 15, further comprising federating the first trained local model and the one or more additional trained local models to generate a trained federated model.

Clause 17. The method of clauses 14 to 16, further comprising receiving, from a second client, an amended model proposal; training an amended trained local model based on the amended model proposal and privately stored data from the second client to generate an amended trained local model; and training one or more additional amended trained local models, each additional amended trained local model based on the amended model proposal and privately stored data for one additional client, such that the data from each additional client is not exposed to any other client; and federating the amended trained local model and the one or more additional amended trained local models to generate an amended trained federated model.

Clause 18. A system for generating an integrated model, comprising a central server having a plurality of clients, each client privately storing data accessible to the central server; a model trainer configured to: receive a model proposal from a first client; train a proposed model based on the model proposal and privately stored data for the first client to generate a first trained local model; and train one or more additional trained local models, each additional trained local model based on the model proposal and privately stored data for one additional client without exposing the privately stored data for the one additional client to the first client; a model federator configured to federate the first trained local model and the one or more additional trained local models to generate a trained federated model; and a model deployer configured to disseminate the trained federated model to one or more of the plurality of clients.

Clause 19. The system of clause 18, wherein each client operates in a unique environment.

Clause 20. The system of clauses 18 to 19, wherein data from each client is made accessible to the central server as part of a subscription model.

### List of Reference Signs:

aircraft 100
right wing 102A
left wing 102B
left wing 102B
wing spoiler 104A, 104B
spoiler power control units 106A, 106B
system 200
central server 205
first client 210
second client 212
third client 214
data 220, 222, 224
model trainer 230
model federator 232
model deployer 234
logic machine 236
storage machine 238
testing system 300
intermediate communications networks 304
electro-mechanical test subject 310
aircraft 312
electro-mechanical components 314
computer terminals 318
computing system 320
computing devices 322
logic subsystem 324
logic devices 326
storage subsystem 328
data storage devices 330
output subsystem 332
sensors 334
on-board computing system 340
on-board data network 342
sensors 344
integrated electro-mechanical components 346
electronic components 348
mechanical components 350
scenarios 400, 500, 600, 700
integrated model 405
model proposal 410
data 420, 422, 424
model trainer 505
first client 510
model proposal 512
relevant data 514
first trained local model 515
first trained local model 516
Second client 520
data 524
second trained local model 526
third client 530
data 534
third trained local model 536
model federator 605
trained federated model 610
federated model deployer 612
amended model proposal 712
relevant data 714
first amended trained local model 716
data 724, 734
trained model 726
trained local model 736
amended trained federated model 740
method800
method steps 810, 820, 830, 840
computing system 900
logic subsystem 910
storage subsystem 920
display subsystem 930
input subsystem 940
communication subsystem 950

## Claims

1. A system (200) for generating an integrated model (405), comprising:
a central server (205) having a plurality of clients (210, 212, 214), each client privately storing data (220, 222, 224) accessible to the central server (205);
a model trainer (230) configured to:
receive (820) a model proposal (410) from a first client (210); and
train (830) the integrated model (405) based on the model proposal (410) and privately stored data (420, 422, 424) for the plurality of clients (210, 212, 214) without exposing the privately stored data (420, 422, 424) for the plurality of clients (210, 212, 214) to the first client (210); and
a model deployer (234) configured to disseminate the trained integrated model (405) to one or more of the plurality of clients (210, 212, 214).

2. The system of claim 1, wherein the model trainer (505) is further configured to:
train a proposed model based on the model proposal (512) and privately stored data (514) from the first client (510) to generate a first trained local model (516); and
train one or more additional trained local models (526, 536), each additional trained local model (526, 536) based on the model proposal (512) and privately stored data (520) for one additional client (520) without exposing the privately stored data (524) for the one additional client (520) to the first client (510).

3. The system of claim 2, further comprising:
a model federator (605) configured to federate the first trained local model (516) and the one or more additional trained local models (526, 536) to generate a trained federated model (610).

4. The system of claim 3, wherein the model trainer (505) is further configured to:
receive, from a second client (520), an amended model proposal (712);
train an amended trained local model based on the amended model proposal (712) and privately stored data (714) from the second client (520) to generate a first amended trained local model (716); and
train one or more additional amended trained local models (726, 736), each additional amended trained local model (726, 736) based on the amended model proposal (712) and privately stored data (734) for one additional client (530), such that the data (734) from each additional client (530) 3is not exposed to any other client (510, 520), and wherein the model federator (605) is further configured to federate the amended trained local model (716) and the one or more additional amended trained local models (726, 736) to generate an amended trained federated model (740).

5. The system of claim 4, wherein the model deployer (612) is configured to compare the trained federated model (610) and the amended trained federated model (740), and to disseminate a higher performing federated model to each of the plurality of clients (510, 520, 530).

6. The system of claim one of claims 1-5, wherein the model deployer (612) disseminates the model proposal (512) to at least some of the plurality of clients (510, 530) prior to training each additional trained local model (726, 736), wherein
data (724, 734) is preferably uploaded by one or more additional clients (510, 530) in response to dissemination of the model proposal (512).

7. The system of one of claims 2-6, wherein the model deployer (612) disseminates the first trained local model (516) to the first client (510) and disseminates each additional trained local model (526, 536) to a respective additional client (520, 530).

8. The system of one of claims 2-7, wherein the proposed model (410) predicts a likelihood of an occurrence of a future event.

9. The system of one of claims 1-8, wherein the privately stored data used to train additional trained local models (526, 536) includes one or more instances of a previous occurrence of the event.

10. The system of one of claims 1-9, wherein the plurality of clients are airlines employing common aircraft models, the future event preferably including a maintenance trigger for an aircraft component.

11. The system of one of claims 2 - 10, wherein the trained integrated model (405) comprises one or more parameters that differ from parameters of the first trained local model (516).

12. A method (800) for generating an integrated model (405), comprising:
accessing (810) privately stored data (420, 422, 424) for a plurality of clients (210, 212, 214);
receiving (820) a model proposal (410) from a first client (210);
training (830) the integrated model (405) based on the model proposal (410) and
privately stored data (420, 422, 424) for the plurality of clients (210, 212, 214) without exposing the privately stored data (420, 422, 424) for the plurality of clients (210, 212, 214) to the first client (210); and
disseminating (840) the trained integrated model (405) to one or more of the plurality of clients (210, 212, 214).

13. The method of claim 12, further comprising:
training a proposed model based on the model proposal (512) and privately stored data (514) from the first client (510) to generate a first trained local model (516); and
training one or more additional trained local models (526, 536), each additional trained local model (526, 536) based on the model proposal (512) and privately stored data (520) for one additional client (520) without exposing the privately stored data (524) for the one additional client (520) to the first client (510).

14. The method of claim 13, further comprising:
federating the first trained local model (516) and the one or more additional trained local models (526, 536) to generate a trained federated model (610).

15. The method of claim 14, further comprising:
receiving, from a second client (520), an amended model proposal (712);
training an amended trained local model based on the amended model proposal (712) and privately stored data (714) from the second client (520) to generate an amended trained local model (716); and
training one or more additional amended trained local models (726, 736), each additional amended trained local model (726, 736) based on the amended model proposal (712) and privately stored data (734) for one additional client (530), such that the data (734) from each additional client (530) is not exposed to any other client (510, 520); and
federating the amended trained local model (716) and the one or more additional amended trained local models (726, 736) to generate an amended trained federated model (740).
